# EUROPÄISCHE PATENTSCHRIFT

(11) **EP 1 207 280 B1**
(45) Veröffentlichungstag und Bekanntmachung des Hinweises auf die Patenterteilung: **03.03.2004**
(21) Anmeldenummer: 01118488.4
(22) Anmeldetag: 01.08.2001
(51) Int. Cl.: F01N 3/22, F01N 11/00

(54) **Sekundärluftzuführeinheit**
Secondary air supply device
Dispositif d'alimentation d'air secondaire

(30) Priorität: 08.01.2001 DE 10100543; 17.11.2000 DE 10057217
(43) Veröffentlichungstag der Anmeldung: 22.05.2002
(73) Patentinhaber: Pierburg GmbH, 41460 Neuss (DE)
(72) Erfinder: Kloda, Martin, 50765 Köln (DE); Rösgen, Thomas, 41516 Grevenbroich (DE)
(74) Vertreter: Ter Smitten, Hans

(56) Entgegenhaltungen:
- EP-A- 0 663 516
- DE-C- 19 713 180
- US-A- 5 921 077
- PATENT ABSTRACTS OF JAPAN vol. 018, no. 027 (M-1543), 17. Januar 1994 (1994-01-17) & JP 05 263637 A (HITACHI LTD;OTHERS: 01), 12. Oktober 1993 (1993-10-12)

## Beschreibung

Die Erfindung betrifft eine Sekundärluftzuführeinheit für eine Brennkraftmaschine mit einem mittels einer Steuereinheit betriebenen Sekundärluftgebläse mit einer Zuluftleitung, das Sekundärluft durch eine Sekundärluftleitung zu einem Sekundärluftventil führt, wobei ein Luftmassensensor zur Messung des Luftmassenstromes vorgesehen ist.

Derartige Sekundärluftzuführeinheiten sind hinlänglich bekannt. Die Sekundärluftzuführeinheit dient dazu, unverbrauchte Brennstoffanteile in der Kaltstartphase durch Einblasung von Frischluft ins Abgas nachzuoxydieren, das Anspringverhalten des Katalysators zu verbessern und auf diese Weise den Schadstoffausstoß zu minimieren. Der Luftmassensensor liefert dabei den Ist-Wert des Luftmassenstroms und leitet diesen Ist-Wert zur Elektronikeinheit weiter, die einerseits mit dem Motor des Sekundärluftgebläses und andererseits mit einer übergeordneten Steuereinheit, beispielsweise einem Motorsteuergerät verbunden ist. Um eine einwandfreie und genaue Sekundärluftzuführung sicherzustellen, muß das Signal des Luftmassensensors in bestimmten Zeitabständen plausibilisiert werden. Dazu wird bisher der vom Luftmassensor gemessene Sekundärluftmassenstrom mit der durch die eingeblasene Luft verursachten Änderung eines Lambda-Sondensignals der Brennkraftmaschine korreliert. Da jedoch die Lambda-Sonde in der Sekundärluftphase nach dem Motorstart in der Regel außer Betrieb ist, muß zur Diagnose häufig eine weitere Sekundärluftzuführung bei im Betrieb befindlichen LambdaSonden erfolgen. Dies führt zu einer negativen Beeinflussung der Abgasemissionen der Brennkraftmaschine.

Hiervon ausgehend liegt der Erfindung die Aufgabe zugrunde, eine Sekundärluftzuführeinheit zu schaffen, die den oben genannten Nachteil vermeidet.

Diese Aufgabe wird erfindungsgemäß dadurch gelöst, daß von der Sekundärluftleitung eine Prüfleitung abzweigt, und daß Mittel vorgesehen sind, die einen definierten Luftmassenstrom vorsehen, wodurch eine Überprüfung des Luftmassensensors mittels der Steuereinheit möglich ist.

Auf diese Weise kann die gesetzlich vorgeschriebene Diagnose der Sekundärluftzuführeinheit auf einfache und kostengünstige Weise ohne Beeinflussung der Abgasemissionen der Brennkraftmaschine durchgeführt werden. Eine besonders einfache Ausführungsform ergibt sich dann, wenn die Mittel aus Strömungswiderständen, wie Querschnittsverengung, Lochscheibe, Venturidüse, Lavaldüse etc. bestehen. Eine besonders genaue Diagnose ergibt sich dabei durch die Verwendung einer im überkritischen Zustand betriebenen Lavaldüse, die einen definierten Luftstrom vorsieht. In einer ersten Ausführungsform sind die Mittel in der Prüfleitung vorgesehen. Um Luftleckage während der Sekundärluftzufuhr zu verhindern, kann der Lavaldüse ein 2/2-Wegeventil vorgeschaltet sein. In einer zweiten Ausführungsform sind die Mittel in der Zuluftleitung angeordnet, wobei parallel zu den Mitteln in 2/2 - Wegeventil angeordnet sein kann, um zwischen Prüf- und Betriebsphase zu schalten. Gemäß einer weiteren vorteilhaften Ausführungsform kann dieses 2/2-Wegeventil mit einem Ansteuerventil des Sekundärluftventils gekoppelt sein, so daß die Steuereinheit lediglich einen Ausgangskanal für die Steuerung des Sekundärluftventils und die Freischaltung der Prüfleitung benötigt. Wenn die Prüfleitung in die Zuluftleitung mündet, wird ein geschlossenes System geschaffen, das unempfindlicher gegen Verschmutzung ist. Der Luftmassensensor ist vorteilhafterweise in der Zuluftleitung anzuordnen.

Ausführungsbeispiele der Erfindung sind in der Zeichnung dargestellt und werden nachfolgend beschrieben. Dabei zeigt:
- Figur 1: eine schematische Ansicht einer ersten Ausführungsform;
- Figur 2: eine schematische Ansicht einer zweiten Ausführungsform.

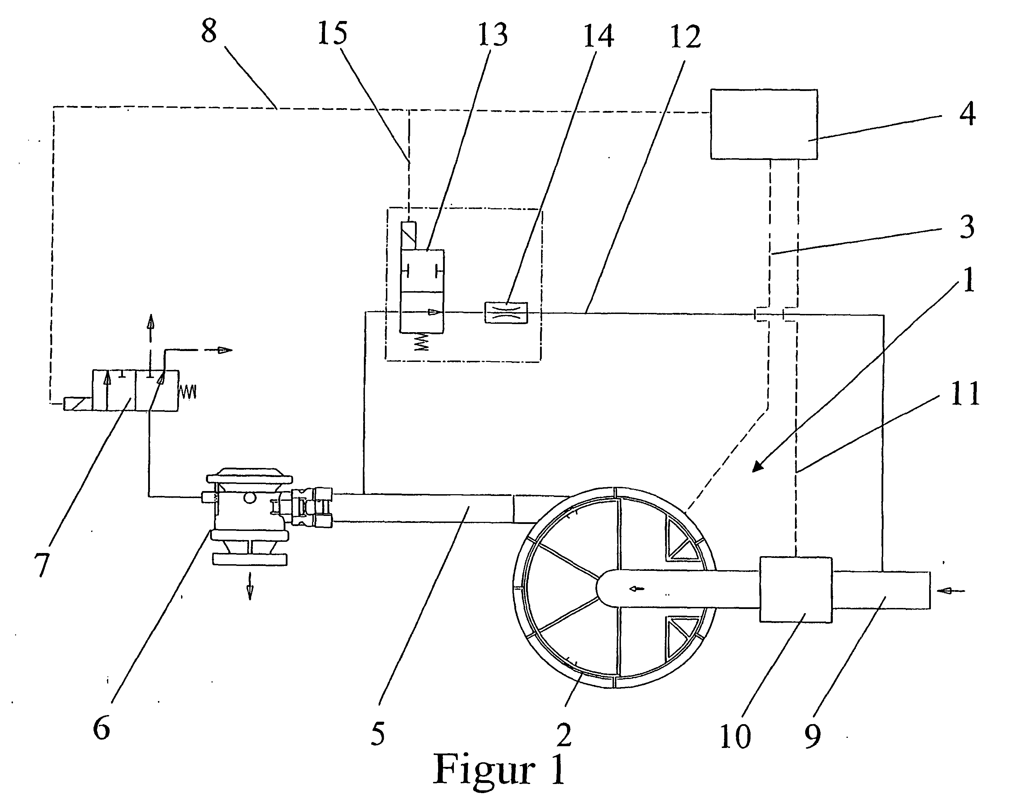

Figur 1 zeigt in schematischer Form eine erfindungsgemäße Sekundärluftzuführeinheit 1.

Diese Sekundärluftzuführeinheit weist ein Sekundärluftgebläse 2 auf, das über eine Steuerleitung 3 durch eine Steuereinheit 4 geregelt wird. Das Sekundärluftgebläse 2 führt Sekundärluft durch eine Sekundärluftleitung 5 zu einem Sekundärluftventil 6, das in der Kaltstartphase diese Sekundärluft in den Abgastrakt führt, um das Abgas nachzuoxydieren. Das Sekundärluftventil 6 wird dabei durch ein Ansteuerventil 7 gesteuert, das wiederum über eine zweite Steuerleitung 8 mit der Steuereinheit 4 verbunden ist.

Die Sekundärluft wird durch das Sekundärluftgebläse 2 aus der Atmosphäre über eine Zuluftleitung 9 angesaugt. In der Zuluftleitung 9 ist ein Luftmassensensor 10 zur Messung des angesaugten Luftmassenstromes angeordnet. Dieser Luftmassensensor 2 gibt den Istwert des Luftmassenstromes in der Zuluftleitung 9 über eine dritte Steuerleitung 11 an die Steuereinheit 4.

Erfindungsgemäß ist eine Prüfleitung 12 vorgesehen, die im vorliegenden Ausführungsbeispiel ein 2/2-Wegeventil 13 sowie eine Lavaldüse 14 aufweist und in die Zuluftleitung 9 mündet. Das 2/2-Wegeventil 13 ist über eine Leitung 15 an die Steuerleitung 8 gekoppelt, so daß die Prüfleitung während der Sekundärluftzuführung geschlossen ist und während der Unterbrechung der Sekundärluftzuführung geöffnet ist. Es ist jedoch auch möglich, das 2/2-Wegeventil über eine eigene Steuerleitung mit der Steuereinheit 4 zu verbinden, so daß zusätzlich eine Dichtheitsüberprüfung des Sekundärluftsystems und eine Funktionsüberprüfung des 2/2-Wegeventils erfolgen kann. Im vorliegenden Fall. kann während unterbrochener Sekundärluftzuführung die Überprüfung des Luftmassensensors stattfinden. Hierzu wird mittels der im überkritischen Zustand betriebenen Lavaldüse 14 ein definierter Luftmassensstrom erzeugt der einer in der Steuereinheit 4 hinterlegten Einstellung entspricht und mit dem tatsächlich gemessenen Luftmassenstrom des Luftmassensensors 10 in der Zuluftleitung 9 verglichen werden kann. Bei einer festgelegten Abweichung kann ein Signal geschaltet werden, daß die Überprüfung des Systems veranlasst.

Denkbar ist jedoch auch, daß die Steuereinheit 4 einen Abgleich vornimmt und den Luftmassensensor neu kalibriert. Die Steuereinheit kann dabei als eigenständige Vorrichtung, aber auch integriert in ein übergeordnetes Motorsteuergerät angesehen werden.

Es ist natürlich auch denkbar, die Prüfleitung 12 nicht in die Zuluftleitung 9 münden zu lassen, sondern den Luftmassenstrom in die Atmosphäre abzuleiten. Desweiteren können auch noch Druck- und/oder Temperaturkompensationen des Luftmassenstromes vorgenommen werden, um die Genauigkeit des Prüfens zu erhöhen.

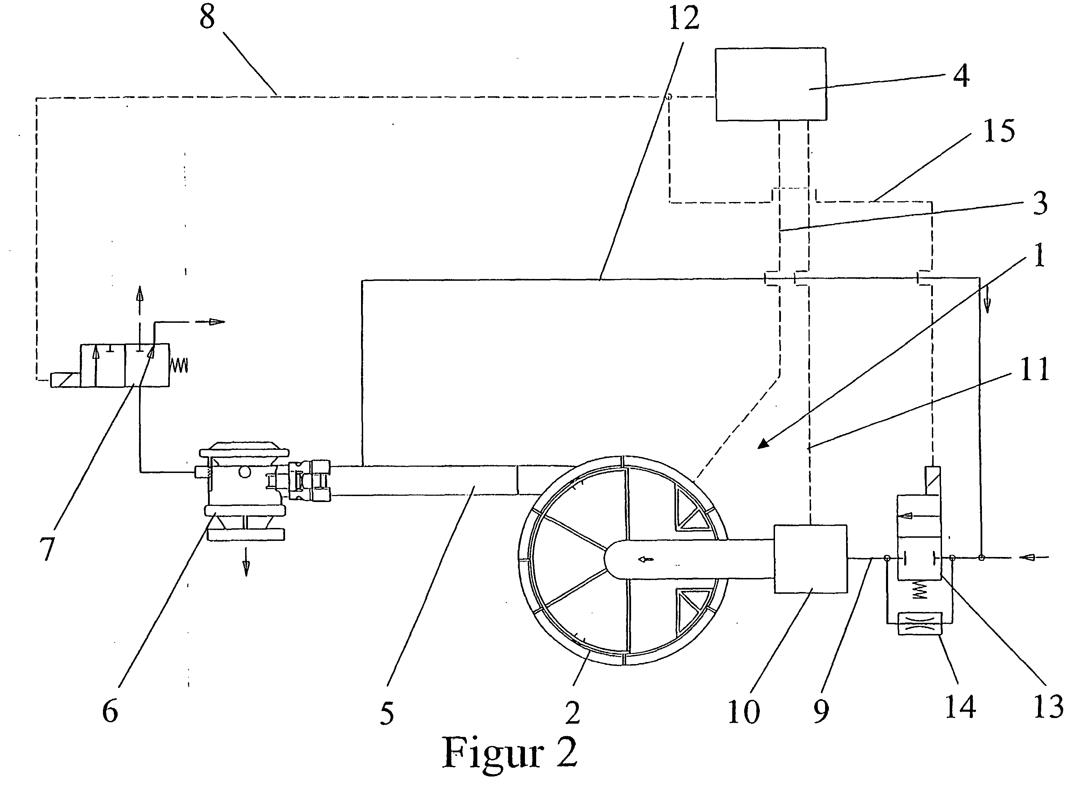

Eine zweite Ausführungsform der erfindungsgemäßen Sekundärluftzuführeinheit 1 zeigt Figur 2. Im Gegensatz zur Figur 1 ist die Lavaldüse 14 nun in der Zuluftleitung 9 angeordnet, wobei das 2/2 - Wegeventil 13 parallel zur Lavaldüse 14 geschaltet ist. Hierdurch kann auf einfache Weise zwischen Prüf- und Betriebsphase der Sekundärluftzuführeinheit hin- und hergeschaltet werden.

## Patentansprüche

1. Sekundärluftzuführeinheit für eine Brennkraftmaschine mit einem mittels einer Steuereinheit betriebenen Sekundärluftgebläse mit einer Zuluftleitung, das Sekundärluft durch eine Sekundärluftleitung zu einem Sekundärluftventil führt, wobei ein Luftmassensensor zur Messung des Luftmassenstromes vorgesehen ist, **dadurch gekennzeichnet, daß**
von der Sekundärluftleitung (5) eine Prüfleitung (12) abzweigt, und daß Mittel (14) vorgesehen sind, die einen definierten Luftmassenstrom vorsehen, wodurch eine Überprüfung des Luftmassensensors (10) mittels der Steuereinheit (4) möglich ist.

2. Sekundärluftzuführeinheit nach Anspruch 1, **dadurch gekennzeichnet, daß** die Mittel aus Strömungswiderständen, wie Querschnittsverengung, Lochscheibe, Venturidüse, Lavaldüse etc. bestehen.

3. Sekundärluftzuführeinheit nach Anspruch 2, **dadurch gekennzeichnet, daß** die Mittel (14) eine im überkritischen Zustand betriebene Lavaldüse aufweisen.

4. Sekundärluftzuführeinheit nach einem der vorherigen Ansprüche, **dadurch gekennzeichnet, daß** die Mittel (14) in der Prüfleitung (12) vorgesehen sind.

5. Sekundärluftzuführeinheit nach Anspruch 4, **dadurch gekennzeichnet, daß** der Lavaldüse (14) ein 2/2-Wegeventil (13) vorgeschaltet ist.

6. Sekundärluftzuführeinheit nach einem der Ansprüche 1 - 3, **dadurch gekennzeichnet, daß** die Mittel (14) in der Zuluftleitung (9) angeordnet sind.

7. Sekundärluftzuführeinheit nach Anspruch 6, **dadurch gekennzeichnet, daß** parallel zu den Mitteln (14) ein 2/2 - Wegeventil (13) geschaltet ist.

8. Sekundärluftzuführeinheit nach Anspruch 5 oder 7, **dadurch gekennzeichnet, daß** das 2/2-Wegeventil (13) mit einem Ansteuerventil (7) des Sekundärluftventils (6) gekoppelt ist.

9. Sekundärluftzuführeinheit nach einem der vorherigen Ansprüche, **dadurch gekennzeichnet, daß** der Luftmassensensor (10) in der Zuluftleitung (9) angeordnet ist.

10. Sekundärluftzuführeinheit nach einem der vorherigen Ansprüche, **dadurch gekennzeichnet, daß** die Prüfleitung (12) in die Zuluftleitung (9) mündet.

## Claims

1. Secondary air supply unit for an internal combustion engine with a secondary air blower, operated by means of a control unit, having an air supply duct and conducting secondary air through a secondary air duct to a secondary air valve, an air mass sensor being provided to measure the air mass flow,
**characterised in that**
a test line (12) branches off from the secondary air duct (5) and means (14) are provided which provide a defined air mass flow, making it possible to check.the air mass sensor (10) by means of the control unit (4).

2. Secondary air supply unit according to claim 1, **characterised in that** the means consist of flow resistances, such as cross-sectional narrowing, breaker plate, venturi nozzle, Laval nozzle, etc.

3. Secondary air supply unit according to claim 2, **characterised in that** the means (14) have a Laval nozzle operated in supercritical state.

4. Secondary air supply unit according to one of the preceding claims, **characterised in that** the means (14) are provided in the test line (12).

5. Secondary air supply unit according to claim 4, **characterised in that** a 2/2 directional control valve is connected upstream (13) of the Laval nozzle (14).

6. Secondary air supply unit according to one of claims 1 to 3, **characterised in that** the means (14).are arranged in the air supply duct (9).

7. Secondary air supply unit according to claim 6, **characterised in that** a 2/2 directional control valve (13) is switched parallel to the means (14).

8. Secondary air supply unit according to claim 5 or 7, **characterised in that** the 2/2 directional control valve (13) is coupled to a trigger valve (7) of the secondary air valve (6).

9. Secondary air supply unit according to one of the preceding claims, **characterised in that** the air mass sensor (10) is arranged in the air supply duct (9).

10. Secondary air supply unit according to one of the preceding claims, **characterised in that** the test line (12) runs into the air supply duct (9).

## Revendications

1. Unité d'alimentation en air secondaire pour un moteur thermique présentant une soufflante d'air secondaire comportant une conduite d'amenée d'air fonctionnant au moyen d'une unité de commande, qui conduit de l'air secondaire via une conduite d'air secondaire vers une vanne d'air secondaire, un capteur de masse d'air étant prévu pour mesurer le débit massique de l'air,
**caractérisée en ce que**
une conduite de contrôle (12) bifurque à partir de la conduite d'air secondaire (5), et que des moyens (14) sont prévus qui prévoient un débit massique d'air défini, ce qui permet une vérification du capteur de masse d'air (10) au moyen de l'unité de commande (4).

2. Unité d'alimentation en air secondaire selon la revendication 1, **caractérisée en ce que** les moyens sont constitués de résistances à l'écoulement, comme un étranglement, une plaque perforée, un venturi, une tuyère de Laval, etc.

3. Unité d'alimentation en air secondaire selon la revendication 2, **caractérisée en ce que** les moyens (14) présentent une tuyère de Laval fonctionnant à l'état supercritique.

4. Unité d'alimentation en air secondaire selon l'une des revendications précédentes, **caractérisée en ce que** les moyens (14) sont prévus dans la conduite d'amenée d'air (12).

5. Unité d'alimentation en air secondaire selon la revendication 4, **caractérisée en ce qu'**une vanne 2/2 voies (12) est montée en amont de la tuyère de Laval (14).

6. Unité d'alimentation en air secondaire selon l'une des revendications 1 à 3, **caractérisée en ce que** les moyens (14) sont disposés dans la conduite d'amenée d'air (9).

7. Unité d'alimentation en air secondaire selon la revendication 6, **caractérisée en ce qu'**une vanne 2/2 voies (13) est montée parallèlement aux moyens (14).

8. Unité d'alimentation en air secondaire selon la revendication 5 ou 7, **caractérisée en ce que** la vanne 2/2 voies (13) est couplée à une vanne de pilotage (7) de la vanne d'air secondaire (6).

9. Unité d'alimentation en air secondaire selon l'une des revendications précédentes, **caractérisée en ce que** le capteur de masse d'air (10) est monté dans la conduite d'amenée d'air (9).

10. Unité d'alimentation en air secondaire selon l'une des revendications précédentes, **caractérisée en ce que** la conduite de contrôle (12) débouche dans la conduite d'amenée d'air (9).
